# EUROPÄISCHE PATENTSCHRIFT

(11) **EP 1 640 080 B1**
(45) Veröffentlichungstag und Bekanntmachung des Hinweises auf die Patenterteilung: **17.10.2007**
(21) Anmeldenummer: 05020596.2
(22) Anmeldetag: 21.09.2005
(51) Int. Cl.: B21D 39/02

(54) **Bördelvorrichtung und Bördelverfahren mit Bauteilschutz**
Hemming device and method with workpiece protection
Dispositif et méthode de sertissage avec protection de la pièce

(30) Priorität: 24.09.2004 DE 102004046432; 13.04.2005 DE 202005005880 U
(43) Veröffentlichungstag der Anmeldung: 29.03.2006
(73) Patentinhaber: EDAG Engineering + Design Aktiengesellschaft, 36039 Fulda (DE)
(72) Erfinder: Quell, Ewald, 36041 Fulda-Sickels (DE)
(74) Vertreter: Schwabe - Sandmair - Marx

(56) Entgegenhaltungen:
- EP-A- 1 447 155

## Beschreibung

Die Erfindung betrifft eine Bördelvorrichtung zum Rollbördeln eines Rands eines Bauteils oder sonstigen Werkstücks längs einer Bördelkante und ein Bördelverfahren. Die Bördelvorrichtung bildet vorzugsweise eine Falzvorrichtung zur Herstellung einer Falzverbindung. Bei dem Bauteil handelt es sich vorzugsweise um ein Karosserieteil als solches oder in einem bereits eingebauten Zustand. Die Erfindung ist insbesondere dann von Vorteil, wenn das Karosserieteil im späteren, fertigen Produkt, vorzugsweise einem Fahrzeug, eine Sichtfläche bildet, beispielsweise ein Außenteil der Karosserie.

Die Erfindung bezieht sich vorzugsweise auf eine Vorrichtung zum Falzen des Randes eines ersten, vorzugsweise eine Außenseite einer Karosserie bildenden Karosserieteils, wobei in dessen Falztasche der Rand eines zweiten, beispielsweise ein Innenteil der Karosserie bildenden Karosserieteiles liegt. Die Vorrichtung weist einen Bördelkopf mit wenigstens einer an der Außenseite des ersten Karosserieteils abgestützten Gegendruckrolle und vorzugsweise wenigstens zwei der Gegendruckrolle oder je einer Gegendruckrolle gegenüberliegenden Andruckrollen zum sukzessiven Umschlagen des Rands des ersten Karosserieteils auf.

Eine Vorrichtung gemäss dem Oberbegriff des Anspruchs 1 sowie das Verfahren zum Rollbördeln gemäss dem Oberbegriff des Anspruchs 33 sind der EP-A-1 447 155 zu entnehmen.

Die geschilderte Situation, dass ein Außenteil der Karosserie mit einem Innenteil durch Falzen verbunden werden muss, tritt zum Beispiel bei Radhäusern von Fahrzeugkarosserien auf. Die Außenhaut der Karosserie besitzt einen teil-, vorzugsweise halbkreisförmigen, Ausschnitt, an dessen Rand auf der Innenseite der Karosserie das so genannte Radhaus befestigt wird. Das Problem dabei ist, dass die Außenseite der Außenhaut nicht oder doch möglichst wenig verformt werden sollte, also zum Beispiel keine Dellen oder Riefen erhalten darf, weil diese wegen einer späteren Lackierung sofort sichtbar wären und den ästhetischen Eindruck, den die Fahrzeugkarosserie vermitteln soll, stören würden.

Im Prinzip verbietet es sich daher, Falzvorrichtungen mit Andruck- und Gegendruckrollen einzusetzen, da die Gegendruckrolle dabei auf der Außenseite der Außenhaut entlang laufen würde und diese verformen könnte. Bei den bisher bekannten Lösungen behilft man sich mit Schiebern, die bezogen auf den Radausschnitt radial nach außen hinter den Rand der Außenhaut gefahren werden und dabei diesen nach innen schlagen. Da hierbei auf einen Gegendruck verzichtet wird, kann die Qualität des Falzes nicht immer überzeugen. Darüber hinaus handelt es sich um eine relativ aufwändige Apparatur, die jeweils nur speziell auf die Karosserie eines Fahrzeugtyps ausgerichtet ist, was den Einsatz in Produktionsanlagen, in denen unterschiedliche Karosserietypen gebaut werden, problematisch macht.

Es ist eine Aufgabe der Erfindung, mit einfachen Mitteln den Rand eines Bauteils, vorzugsweise Fahrzeugkarosserieteils, insbesondere ein Außenblech, so umzuschlagen, dass es nicht zu Verformungen des Bauteils kommt. Die Vorrichtung sollte außerdem so gestaltet sein, dass sie rasch an unterschiedliche Bauteilformen angepasst werden kann.

Diese Aufgabe wird durch eine Bördelvorrichtung gemäss Anspruch 1 und durch ein Verfahren gemäss Anspruch 33 gelöst.

Die Erfindung betrifft eine Bördelvorrichtung mit einem Bördelkopf, wenigstens einer ersten Bördelrolle und wenigstens einer zweiten Bördelrolle, die von dem Bördelkopf jeweils drehbar gelagert werden. Bei einem Rollbördeln bildet die erste Bördelrolle eine Andruckrolle, die an einem umzulegenden Rand, vorzugsweise einem schmalen Randstreifen des Bauteils abrollt. Die zweite Bördelrolle wirkt als Gegendruckrolle für die erste Bördelrolle, d. h. sie nimmt die zum Umlegen des Randstreifens um beispielsweise 30° oder 45° von der ersten Bördelrolle aufzubringende Kraft auf. Ihrer jeweiligen Funktion gemäß werden im Folgenden die erste Bördelrolle als Andruckrolle und die zweite Bördelrolle als Gegendruckrolle bezeichnet. Der Bördelkopf kann insbesondere an einem Ende eines Roboterarms befestigt sein, der vorzugsweise sämtliche sechs Freiheitsgrade der Bewegung, zumindest jedoch die für den Bördelvorgang als solchen benötigten Freiheitsgrade aufweist.

Nach der Erfindung umfasst die Bördelvorrichtung ferner eine stabile Schutzstruktur, die an dem Bauteil befestigbar oder beim Rollbördeln befestigt ist. Die Schutzstruktur bildet für die Gegendruckrolle entweder selbst eine Rollbahn, an der die Gegendruckrolle bei dem Rollbördeln abrollt, oder sie bildet die Rollbahn erst mittelbar, indem sie eine Rollbahn stützt, an der die Gegendruckrolle unmittelbar abrollt. Im ersten Fall liegt eine Innenseite der Schutzstruktur an dem Bauteil an und ist an dessen Oberfläche vorzugsweise angepasst geformt. Eine Außenseite der Schutzstruktur bildet die Rollbahn für die Gegendruckrolle. Im zweiten Fall ist die Schutzstruktur im Innenbereich der zu bildenden Bördelkante angeordnet und liegt an der Innenseite des Bauteils an, wobei die Schutzstruktur vorzugsweise an die Oberfläche der Innenseite angepasst geformt ist. Wegen der Stützung an der Innenseite kann das Bauteil im zweiten Fall selbst die Rollbahn für die Gegendruckrolle bilden und wird dennoch nicht, oder weit weniger als ohne innenseitige Stützung durch die andrückende Gegendruckrolle verformt.

Falls die Schutzstruktur selbst die Rollbahn bildet, rollt die Gegendruckrolle nicht unmittelbar auf dem Bauteil ab, sondern an der Schutzstruktur, die vorzugsweise eine Art Matrize bildet, die der Innenseite der Außenkontur des Bauteiles angepasst ist, so dass selbst kleinste räumliche Gestaltungen des Bauteiles exakt nachgebildet werden können und Verformungen nicht zu befürchten sind. Der Bördelkopf selbst kann ein Standardtyp sein, der auch für andere Bördelvorgänge einsetzbar ist. Dies hat vor allem den Vorteil, dass auf einer Produktionsstraße für beispielsweise Fahrzeugkarosserien, vorzugsweise Automobilkarosserien, mehrere unterschiedliche Karosserien verarbeitet werden können. Es müssen nur jeweils angepasste Schutzstrukturen vorgehalten werden, die zunächst an die Karosserie angesetzt oder in dem Innenbereich der Bördelkante eingesetzt werden, bevor der Bördelvorgang beginnt.

Diejenige Fläche der Schutzstruktur, mit der die Schutzstruktur an der zu schützenden Fläche anliegt, ist in bevorzugten Ausführungen an diese Anlagefläche des Bauteils angeschmiegt geformt, so dass eine vollflächige Anlage erzielt wird.

Vorzugsweise besitzen die Karosserien und die Schutzstruktur je wenigstens eine Marke, die einen passgenauen Ansatz des Schutzstreifens an dem umzubördelnden Rand erlaubt. Bei der wenigstens einen Marke an der Karosserie kann es sich um eine von Hause aus vorgegebene Kontur oder Kante handeln, wie Ausschnitte für Türen, Holme oder dergleichen. Es kann auch gezielt wenigstens ein Loch eingebracht sein. Die Schutzstruktur verfügt in bevorzugten Ausführungen über ein Zentrierelement, vorzugsweise Positionierstift, und wenigstens ein Anschlagelement, das als Konturanlage verwendet wird. Alternativ kann die Schutzstruktur auch nur mit zwei Zentrierelementen, vorzugsweise Positionierstiften, oder nur mit zwei Anschlagelementen versehen sein. Mit derartigen Paaren von Positioniermitteln, die mit entsprechenden Positioniermitteln des Bauteils oder im angenommenen Beispielfall der Karosserie zusammenwirken, ist die Schutzstruktur relativ zu der Bördelkante genau positioniert, wenn sie an der Anlagefläche des Bauteils anliegt. In der alternativen Ausführung, in der die Schutzstruktur im Innenbereich der Bördelkante angeordnet wird, kann ein einziges Positionierelement, vorzugsweise ein Anschlagelement, für die Positionierung genügen.

In einer Weiterbildung lagert der Bördelkopf eine dritte Bördelrolle, die bei einem Bördelvorgang eine weitere Gegendruckrolle für die erste Bördelrolle und vorzugsweise auch eine Gegendruckrolle für die zweite Bördelrolle bildet. Mittels solch einer dritten Bördelrolle kann ein geschlossener Kraftfluss erhalten werden. Vorteilhaft ist eine derartige Ausgestaltung insbesondere für eine im Innenbereich der Bördelkante angeordnete Schutzstruktur. Die dritte Bördelrolle kann als Nieder- oder Gegenhalter wirkend auch der Befestigung der Schutzstruktur dienen. So kann insbesondere bei einer im Innenbereich der Bördelkante angeordneten Schutzstruktur auf eine darüber hinausgehende Befestigung sogar gänzlich verzichtet werden. Grundsätzlich gilt dies auch für eine außen anliegende Schutzstruktur.

In noch einer Weiterbildung ist an dem Bördelkopf zusätzlich zu den wenigstens zwei Bördelrollen ein Tastelement befestigt oder angeformt, vorzugsweise als Tastrolle drehbar gelagert, und die Schutzstruktur bildet eine Führungsbahn für das Tastelement, vorzugsweise eine Rollbahn, die dem Verlauf der Bördelkante folgt. Das bei einem Bördelvorgang an der Führungsbahn längs der Bördelkante geführte Tastelement führt seinerseits den Bördelkopf, wodurch der für die Steuerung der Bewegungen des Bördelkopfs zu betreibende Aufwand, insbesondere Messaufwand, reduziert werden kann. Für das Rollbördeln längs der Bördelkante kann grundsätzlich sogar gänzlich auf eine Steuerung oder Regelung anhand von durch Messung gewonnenen Positionssignalen verzichtet werden. Falls der Bördelkopf mittels eines Tastelements längs der Bördelkante geführt wird, indem das Führungselement an einer Führungskurve geführt ist, die vorzugsweise der Schutzstreifen bildet, grundsätzlich aber beispielsweise auch die Bördelkante selbst bilden könnte, ist der Bördelkopf vorzugsweise in eine zumindest im Wesentlichen normal zu der Führungsbahn weisende Richtung hin und her beweglich gelagert, vorzugsweise gegen eine elastische Rückstellkraft. Die elastische Rückstellkraft kann zweckmäßigerweise eine Pneumatikkraft sein.

Vorteilhafterweise dient der Bördelkopf oder eine Plattform, an welcher der Bördelkopf befestigt ist, als Träger für einen Abstandssensor, mit dem der Abstand des Bördelkopfs von dem Bauteil oder der Schutzstruktur ermittelbar ist. Ein berührungslos arbeitender Abstandssensor kann das Tastelement ersetzen, indem der Abstandssensor bei dem Rollbördeln längs der zum Tastelement beschriebenen Führungsbahn fährt, dabei ständig berührungslos den Abstand misst und die Messwerte zur Regelung der Bewegung des Bördelkopfs verwendet werden. Als Abstandssensor genügt ein 1D-Sensor.

In Weiterbildungen dient der Bördelkopf oder die genannte Plattform als Träger für einen zweidimensionalen, berührungslos arbeitenden Sensor, d. h. einen 2D-Sensor, mit dem die Position des Bördelkopfs relativ zu dem Bauteil, insbesondere dessen Bördelkante, in einer Ansichtsebene auf das Bauteil ermittelt werden kann. Im bevorzugten Anwendungsfall, dem Rollbördeln an einem Karosserieteil, erstreckt sich die Ansichtsebene im üblichen Koordinatensystem von Fahrzeugkarosserien in der XZ-Ebene. Diese Sensorik wird nur benötigt und in vorteilhaften Verfahrensführungen auch nur dazu benutzt, um den Bördelkopf für das Rollbördeln an der Bördelkante anzusetzen. Falls ein mechanisches Tastelement oder der genannte Abstandssensor nicht vorgesehen ist, kann der 2D-Sensor oder eine andere Ersatzsensorik, beispielsweise zwei 1D-Sensoren, auch zur Regelung der Bewegungen des Bördelkopfs beim Rollbördeln verwendet werden. Vorzugsweise ist die 2D-Sensorik jedoch zusätzlich zu dem genannten Tastelement oder dem genannten Abstandssensor vorhanden. Eine Sensorik und Regelung in der XZ-Ebene ist insbesondere für das Falzen eines so genannten Tropfenflansches von Vorteil. Falls jedoch davon ausgegangen werden darf, dass die zu bördelnden Bauteile mit stets ausreichender Genauigkeit die für das Rollbördeln vorgesehene Position einnehmen und auch in sich stets mit ausreichender Genauigkeit geformt sind, kann auf eine 2D-Sensorik verzichtet werden, da man sich in diesem Fall darauf verlassen kann, dass es genügt, wenn der Bördelkopf eine vorgegebene Position anfährt, beispielsweise eine vorprogrammierte Position. Unter den genannten Umständen kann auch auf das Tastelement oder den Abstandssensor verzichtet werden.

Die Schutzstruktur, zumindest ihr die Rollbahn oder Rollbahnstütze bildender Teil, erhält ihre Form vorteilhafterweise in einem Gießverfahren und ist in diesem Sinne vorzugsweise eine Gussstruktur. Die Schutzstruktur kann durch das Gießen so weit vorgeformt sein, dass im Falle der Bildung der Rollbahn durch die Schutzstruktur im Idealfall das Gussstück nur noch einer Nachbearbeitung der die Rollbahn bildenden Oberfläche bedarf. Im Allgemeinen werden allerdings auch noch weitere Oberflächenbearbeitungen erforderlich sein. So werden an der Schutzstruktur vorzugsweise Montagestellen, beispielsweise für die Positionierelemente der Positioniereinrichtung oder gegebenenfalls für Befestigungselemente einer Befestigungseinrichtung nach dem Gießen geschaffen. Obgleich bei ausreichender Festigkeit die Schutzstruktur aus Kunststoff gefertigt sein kann, wird sie vorzugsweise aus einem Metall oder einer Metalllegierung gefertigt. Insbesondere kann sie eine Graugussstruktur sein. Alternativ wäre es jedoch auch denkbar, dass die Schutzstruktur aus Stahl gefertigt ist. Denkbar wäre ferner auch, die Schutzstruktur als Verbundstruktur zu bilden, beispielsweise mit einer aus Stahl oder einem keramischen Material bestehenden Rollbahn und einer Trägerstruktur aus Grauguss oder Kunststoff. Auch eine insgesamt aus keramischem Material bestehende Schutzstruktur soll nicht ausgeschlossen werden.

Der Bördelkopf besteht vorzugsweise aus einem gegenüber einem Halter verschiebbaren Träger, an dem wenigstens eine Gegendruckrolle gelagert ist, und einem am Träger verschiebbar gehaltenen Schlitten, an dem die wenigstens eine Andruckrolle, vorzugsweise wenigstens zwei Andruckrollen, in verschiedenen Anstellwinkeln gelagert ist oder sind, wobei zwischen dem Träger und dem Schlitten vorzugsweise eine Stelleinrichtung vorhanden ist, die arretiert oder so eingestellt werden kann, dass sie eine vorbestimmte Stellkraft ausübt. Zum Umschlagen des Rands um einen bestimmten Winkel wird eine entsprechende Andruckrolle am Kopf ausgewählt, die mit einer Gegendruckrolle den gewünschten Winkel einschließt. Dieses Rollenpaar wird am umzufalzenden Rand des Bauteils, vorzugsweise einer Karosserie, entlang gefahren, so dass dieser um den gewünschten Winkel umgeschlagen wird. Dieser Vorgang wird zwei- oder dreimal wiederholt, wobei der Umschlagwinkel immer enger wird, bis schließlich der Falz geschlossen ist oder, falls eine Falzverbindung nicht hergestellt wird, der gewünschte Biegewinkel erhalten wurde.

Bei einem nur teilweisen Umschlagen des Rands ist die Stelleinrichtung arretiert, so dass der Rand unabhängig von den dafür notwendigen Kräften in den vorgegebenen Winkel gestellt wird. Beim vollständigen Schließen eines Falzes ist hingegen entscheidend, dass eine bestimmte Kraft ausgeübt wird, um den in der Falztasche liegenden Rand eines zweiten Karosserieteils einzuklemmen. Dazu wird die Stelleinrichtung vorzugsweise so angesteuert, dass sie eine vorbestimmte Stellkraft ausübt.

Der Träger und der daran geführte Schlitten sind wiederum verschiebbar an einem Halter gelagert, der in der Regel mit einem Roboterarm verbunden ist, der den Halter in vorberechneten Bahnen bewegt. Zum Umfalzen eines Rands führt der Roboter den Bördelkopf am Rand entlang, wobei die verschiebbare Halterung des Trägers am Halter einen selbsttätigen Ausgleich senkrecht zum Bauteil ermöglicht. Damit werden auch Toleranzen im Hinblick auf die Ausrichtung des Bauteils gegenüber einer dem Roboter bekannten Sollvorgabe ausgeglichen. Eine gesonderte, exakte Erfassung der Ist-Position des Bauteils, vorzugsweise Karosserieblechs, ist damit nicht notwendig.

Bei der Stelleinrichtung handelt es sich vorzugsweise um einen pneumatischen Zylinder, wobei bei einer Arretierung dieser mit einem hohen Luftdruck beaufschlagt wird, was quasi einer Arretierung gleichkommt. Beim Durchführen eines abschließenden Falzvorgangs bestimmt der Druck im Zylinder die auf den Falz ausgeübten Kräfte.

Der Bördelkopf ist besonders einfach handhabbar, wenn für jede der Andruckrollen am Schlitten eine Gegendruckrolle am Träger vorhanden ist. Dann braucht der Kopf nämlich nur als Ganzes von Bördelschritt zu Bördelschritt erneut orientiert werden.

Wie oben erwähnt, kann der Träger am Halter innerhalb von Grenzen frei verschiebbar sein. Damit es aber bei Bewegungen des Roboterarmes nicht zu ruckartigen Oszillationen zwischen den Grenzen kommt, kann zwischen dem Träger und dem Halter ein Dämpfer angeordnet sein.

Die Erfindung bezieht sich weiterhin auf ein Verfahren, wie es oben schon skizziert worden ist. Entscheidend ist, dass zunächst eine Schutzstruktur an den umzufalzenden Bauteilrand angelegt oder in den Innenbereich der Bördelkante eingelegt wird, der eine Rollbahn für die Gegendruckrolle bildet oder stützt. Damit können mit einer erfindungsgemäßen Vorrichtung verschiedene Bauteilformen bearbeitet werden. Es muss lediglich eine jeweils passende Schutzstruktur bereitgehalten werden. Der Bördelkopf kann unverändert bleiben, lediglich seine Steuerung wird vorteilhafterweise der jeweiligen Karosserie angepasst, wobei auch die Dicke der Schutzstruktur Berücksichtigung finden sollte.

Des Weiteren wird die Stelleinrichtung des Bördelkopfs beim teilweisen Umschlagen vorzugsweise arretiert, so dass beim Rollbördeln der durch den Stellwinkel vorgegebene Biegewinkel eingehalten wird. Hingegen wird bei einem abschließenden Falzen vorteilhafterweise eine definierte Kraft ausgeübt, die zu einem optimalen Schließen der Falztasche führt und ausreichend hohe Klemmkräfte auf den in der Falztasche liegenden Rand des zweiten Bauteils erzeugt.

Soweit vorstehend die Erfindung in Bezug auf eine Falzvorrichtung erläutert wurde, gelten die Ausführungen sinngemäß auch für eine Bördelvorrichtung, d.h. für eine Vorrichtung, mittels der eine Falzverbindung gebildet werden, die jedoch auch nur zum Umlegen des Bauteilrands um einen vorbestimmten Winkel dienen kann. Bei dem Bördeln oder Falzen kann der Rand vollständig, d. h. parallel zum gegenüberliegenden Bauteilbereich, oder nur teilweise umgelegt werden.

Über die Vorrichtung als solche hinaus hat die Erfindung auch ein Verfahren zum Gegenstand, das insbesondere mit der Bördelvorrichtung durchgeführt werden kann. Dabei handelt es sich um ein Verfahren zum Rollbördeln eines Bauteils längs einer Bördelkante, zu deren einen Seite das Bauteil eine Sichtfläche oder jedenfalls eine schonend zu behandelnde Fläche und zu deren anderen Seite das Bauteil einen um die Bördelkante zu bördelnden Rand, vorzugsweise Randstreifen, bildet. Nach dem Verfahren wird der Rand mittels einer auf dem Rand abrollenden Andruckrolle und einer Gegendruckrolle um die Bördelkante gebördelt, wobei die Gegendruckrolle nicht unmittelbar auf dem Bauteil, sondern auf einer das Bauteil schützenden Schutzstruktur abrollt, um die von der Andruckrolle auf den Rand ausgeübte Biegekraft aufzunehmen. In der alternativen Ausführung kann die Gegendruckrolle zwar unmittelbar auf dem Bauteil abrollen, gegebenenfalls auch auf einer weiteren, an das Bauteil angelegten Struktur, das Bauteil wird jedoch an seiner von der Gegendruckrolle abgewandten Innenseite von der Schutzstruktur gestützt. Grundsätzlich kann im Falle der im Innenbereich der Bördelkante angeordneten Schutzstruktur diese Schutzstruktur den Rand des Bauteils stützen und auf diese Weise zwar nicht die für das Umlegen von der Andruckrolle ausgeübte Kraft aufnehmen, aber immerhin den als Rollbahn für die Andruckrolle wirkenden Rand stützen. Die Schutzstruktur wird vorzugsweise an dem Bauteil oder an einer Struktur, deren festen Bestandteil das Bauteil bildet, befestigt entweder mit einer zusätzlichen Befestigungseinrichtung oder durch eine als Nieder- oder Gegenhalter wirkende, zusätzliche Rolle oder beides in Kombination. Gegebenenfalls können die Andruck- und die Gegendruckrolle bereits die Befestigungseinrichtung gemeinsam mit dem Bauteil bilden. Die Schutzstruktur ist vorzugsweise dem Verlauf der Bördelkante folgend geformt, zumindest an einem der Bördelkante zugewandten Rand. Grundsätzlich könnte die Schutzstruktur jedoch auch anders geformt sein, was jedoch einen größeren Bördelkopf erfordern könnte, da dieser die Bördelkante und die Schutzstruktur im Bereich der Andruckrolle und der damit zusammenwirkenden Gegendruckrolle umgreift. Die Schutzstruktur ist vorzugsweise als ein Schutzstreifen geformt. Der Schutzstreifen ist vorteilhafterweise zumindest im Wesentlichen so schmal wie die unmittelbar auf dem Schutzstreifen oder der von ihm gestützten Rollbahn abrollende Gegendruckrolle.

Die Erfindung hat auch ein Verfahren zum Gegenstand, bei dem das Werkstück mittels eines ersten Rollenpaars aus Andruckrolle und Gegenrolle um einen ersten Winkel umgelegt und mittels eines zweiten Rollenpaars aus Andruckrolle und Gegenrolle um einen zweiten Winkel weiter umgelegt wird, wobei die Rollen des ersten Rollenpaars bei dem ersten Bördelschritt eine steifere Anordnung als das zweite Rollenpaar beim zweiten Bördelschritt bilden. Die Rollen des ersten Rollenpaars sind bei dem ersten Bördelschritt vorzugsweise zueinander arretiert, so dass ihre Drehachsen als zueinander fixe Achsen betrachtet werden können. Die Rollen des zweiten Rollenpaars sind bei dem zweiten Bördelschritt vorzugsweise zueinander federnd gelagert, so dass die Drehachsen dieser Rollen sich zueinander federnd bewegen können. Gegebenenfalls sind sie relativ zueinander auch nur dämpfend oder aber federnd und dämpfend gelagert. Mit dem zweiten Bördelschritt wird der Rand vorzugsweise vollständig umgelegt, so dass er zumindest im Wesentlichen parallel zu einer über die Bördelkante gegenüberliegende Fläche des Werkstücks zu liegen kommt, wie dies beispielsweise bei Falzverbindungen üblich ist. Zwischen dem ersten Bördelschritt und dem zweiten Bördelschritt können weitere Bördelschritte vorgesehen sein, vorzugsweise mittels noch eines weiteren oder mehrerer weiterer Rollenpaare. Ein oder mehrere weitere Bördelschritte können dem ersten Bördelschritt auch vorgeschaltet sein. Die beiden Bördelschritte können auch im gleichen Lauf durchgeführt werden, falls das erste Rollenpaar und das zweite Rollenpaar ein Tandem bilden, d.h. falls das zweite Rollenpaar dem ersten Rollenpaar nachläuft.

Der Schutzstreifen ist in bevorzugten Ausführungen so geformt und an dem Werkstück oder einer das Werkstück umfassenden Struktur befestigt, dass zwischen der zu schützenden Oberfläche und dem Schutzstreifen keine "Luft" verbleibt. So wird verhindert, dass das Werkstück bei dem Rollbördeln relativ zur Schutzstruktur nachgibt. Die Anlage der Schutzstruktur an der Oberfläche kann über die Länge der Bördelkante linienförmig sein. Bevorzugter ist die Anlage jedoch über die Breite der Gegenrolle oder die Breite der von der Schutzstruktur gebildeten Rollbahn vollflächig, d. h. die Schutzstruktur ist an die zu schützende oder stützende Fläche angeschmiegt geformt.

Vorteilhafte Merkmale werden auch in den Unteransprüchen und deren Kombinationen beschrieben. Die durch die Unteransprüche offenbarten Merkmale und die vorstehend beschriebenen Ausgestaltungen ergänzen einander auch wechselseitig.

Ein Ausführungsbeispiel der Erfindung wird nachfolgend anhand von Figuren erläutert. An dem Ausführungsbeispiel offenbar werdende Merkmale bilden je einzeln und in jeder Kombination die Gegenstände der Ansprüche und auch die vorstehend beschriebenen Ausgestaltungen vorteilhaft weiter. Es zeigen:
- Fig. 1: die räumliche Darstellung eines Schutzstreifens mit einer Haltestruktur,
- Fig. 2: einen Bördelkopf,
- Fig. 3: schematisch den Ablauf eines Bördelvorganges in drei Teilbildern a bis c,
- Fig. 4: einen Schutzstreifen mit einer integrierten Positionier- und Befestigungseinrichtung,
- Fig. 5: die Verwendung einer innen liegenden Schutzstruktur während eines Bördelschritts und
- Fig. 6: einen Bördelschritt mit einem modifizierten Bördelkopf und außen liegender Schutzstruktur.

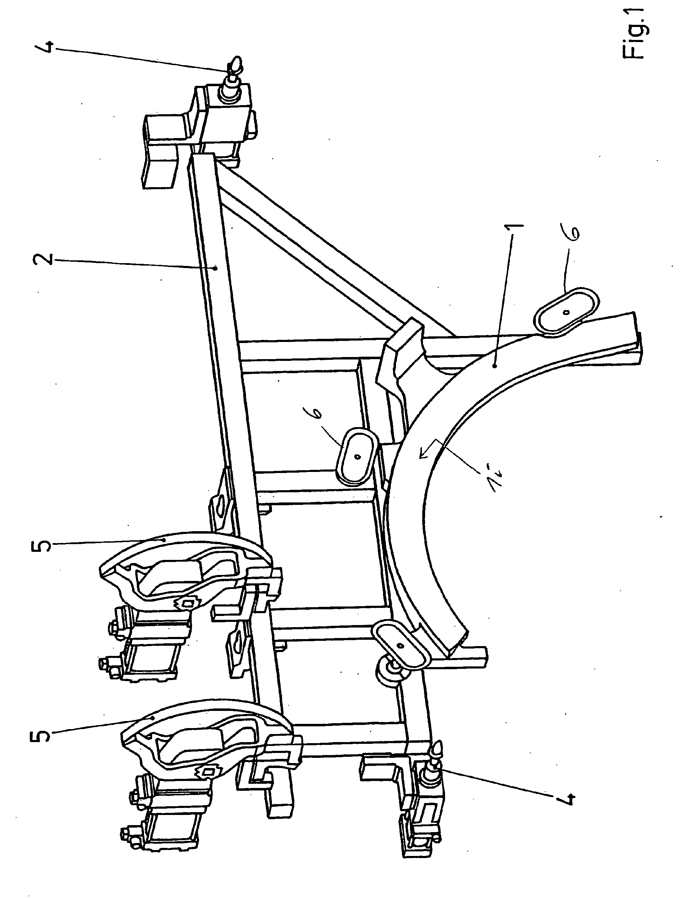

Figur 1 zeigt einen Schutzstreifen 1 in einem Gerüst 2. Wie man erkennt, folgt der Schutzstreifen 1 dem Verlauf eines Radausschnitts. Seine in der Figur sichtbare Innenseite 1i weist eine Kontur auf, die die gewünschte Außenkontur der Karosserie am Radhaus als Negativ nachbildet. Die Außenkontur ist in der Regel keineswegs glatt, sondern häufig mit unterschiedlichen Facetten und Höhenstrukturen versehen, um einen bestimmten ästhetischen Eindruck bzw. einen gleitenden Übergang in die benachbarten Karosserieabschnitte zu erhalten. Diese Konturierung darf keinesfalls verletzt werden.

Das Gerüst 2 weist mehrere Marken in Form von Positionierstiften 4 auf, die in entsprechende Löcher in der Karosserie eingreifen, wodurch der Schutzstreifen 1 eindeutig im Bezug zur Karosserie fixiert ist. Mechanische Spanner 5 halten das Gerüst 2 und damit den Schutzstreifen 1 klemmend an der Karosserie.

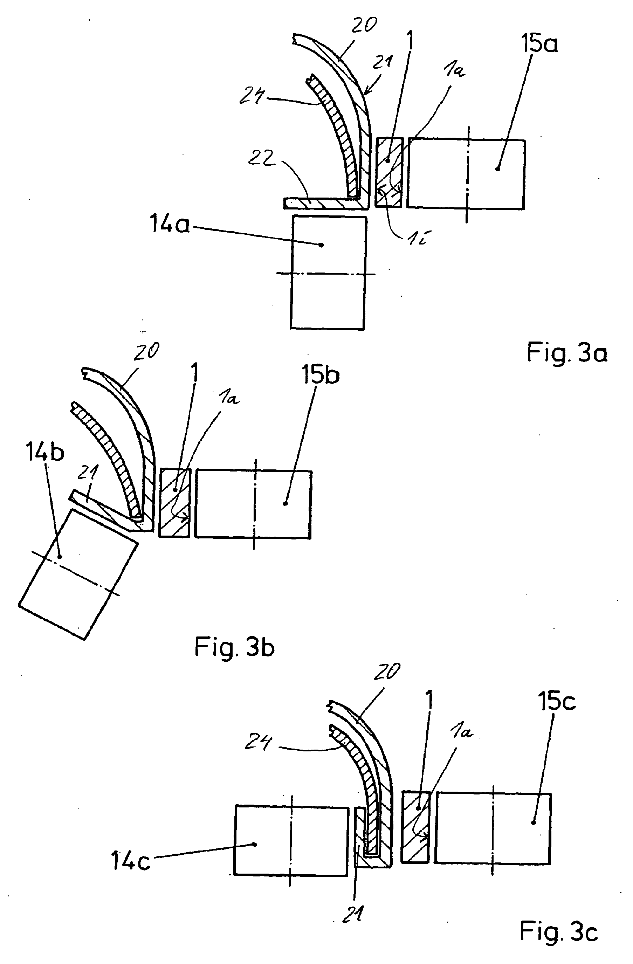

Die Außenseite des Schutzstreifens 1 ist glatt und bildet eine Rollbahn 1a (Fig. 3) für eine Gegendruckrolle eines Bördelkopfes.

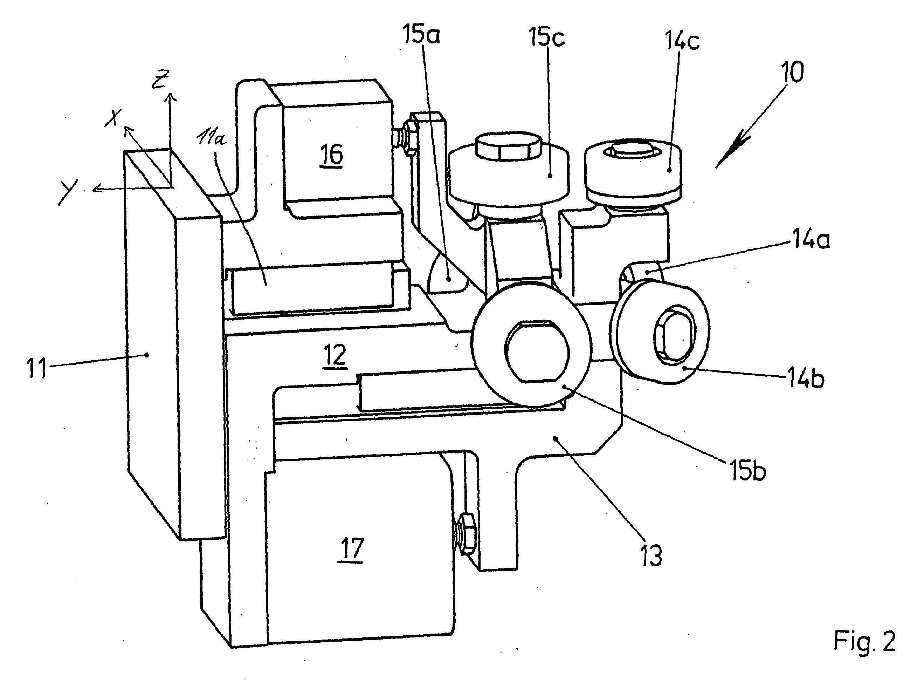

Ein solcher Bördelkopf 10 ist in der Figur 2 dargestellt. Er besteht aus einem Halter 11, einem Träger 12, einem Schlitten 13 sowie drei Andruckrollen 14a, 14b, 14c und drei Gegendruckrollen 15a, 15b, 15c.

Der Träger 12 ist gegenüber dem Halter 11 in einer Schlittenführung 11 a verfahrbar gehalten, wobei eine Dämpfungseinrichtung 16 diese Bewegung begrenzt und gleichzeitig dämpft. Auf jeden Fall bewirkt diese Verfahrbarkeit, dass der Halter 11 im Hinblick auf die Querausrichtung nicht exakt an der Rollbahn 1a entlang gefahren werden muss; vielmehr ergibt sich ein automatischer Ausgleich senkrecht zur Karosserie, d. h. in Y-Richtung.

Die Andruckrollen 14 a, b, c am Schlitten 13 liegen den Gegendruckrollen 15 a, b, c am Träger 12 gegenüber, wobei jedes Paar a, b, c einen anderen Winkel einschließt. Mit dem im Hintergrund erkennbaren Paar a wird der Falz auf 90° gestellt, mit dem im Vordergrund erkennbaren Paar b wird ein Falzwinkel von 45° erreicht und mit dem oben in der Figur erkennbaren Paar c wird der Falz zu einer Falztasche geschlossen. An dieser Stelle sei angemerkt, dass auch lediglich eine Gegendruckrolle vorgesehen werden kann, dann ist aber am Schlitten 13 ein Revolver oder ein anderer Rollenwechsler vorzusehen, um die jeweils passende Andruckrolle der einen Gegendruckrolle gegenüberzustellen. Außerdem können noch weitere Rollenpaare vorhanden sein, um das Umfalzen in kleineren Winkelschritten zu vollziehen.

Die Stelleinrichtung 17 zwischen dem Schlitten 13 und dem Träger 12 weist einen pneumatischen Zylinder auf, der mit einem hohen Druck beaufschlagt werden kann, so dass letztlich der Schlitten 13 am Träger 12 arretiert ist. Diese Einstellung wird gewählt, wenn die Rollenpaare a und b in Aktion sind.

Bei dem abschließenden Schließen des Falzes mit dem Rollenpaar c wird auf den pneumatischen Zylinder ein vorgegebener Druck ausgeübt, so dass eine bestimmte Stellkraft oder Schließkraft beim Schließen des Falzes ausgeübt wird.

Die sukzessiven Falzschritte sind in den Figuren 3a, 3b und 3c dargestellt. Das Karosserieteil 20 weist vor dem Rollfalzen bereits eine vorgeformte Falzkante auf. Zur einen Seite der Falzkante bildet das Karosserieteil 20 eine Sichtfläche 21 und zur anderen Seite einen bereits um einen Winkel von beispielsweise 45° oder 60° umgelegten Randstreifen 22. In den von der Sichtfläche 21 und dem Randstreifen 22 begrenzten Innenbereich der Bördelkante ist der Rand eines zweiten Karosserieteils 24 eingelegt, das durch das Rollfalzen fest mit dem Karosserieteil 20 verbunden wird. Der Schutzstreifen 1 und insbesondere dessen Rollbahn 1a sind ebenso breit wie die Gegendruckrolle 15a. Der Schutzstreifen 1 liegt mit seiner Innenseite 1i auf der Sichtfläche 21 in unmittelbarer Nähe der Falzkante vollflächig auf. In drei Bördelschritten a, b und c wird der Randstreifen 22 sukzessive um einen durch die Winkelstellung der jeweils eingesetzten Andruckrolle 14a, 14b oder 14c vorgegebenen Winkel weiter umgelegt. Im Schritt a (Figur 3a) wird ein Falzwinkel von 90° eingestellt und im Schritt b ein Winkel von etwa 45°. Bei diesen Schritten ist eine feste räumliche Zuordnung von Gegendruckrolle und Andruckrolle eingestellt.

Im anschließenden Schritt c wird der Rand geschlossen, wobei die ausgeübte Stellkraft vom Druck in der Stelleinrichtung bestimmt wird. Dabei wird in der sich bildenden Falztasche der Rand des Karosserieteils 24 eingeklemmt.

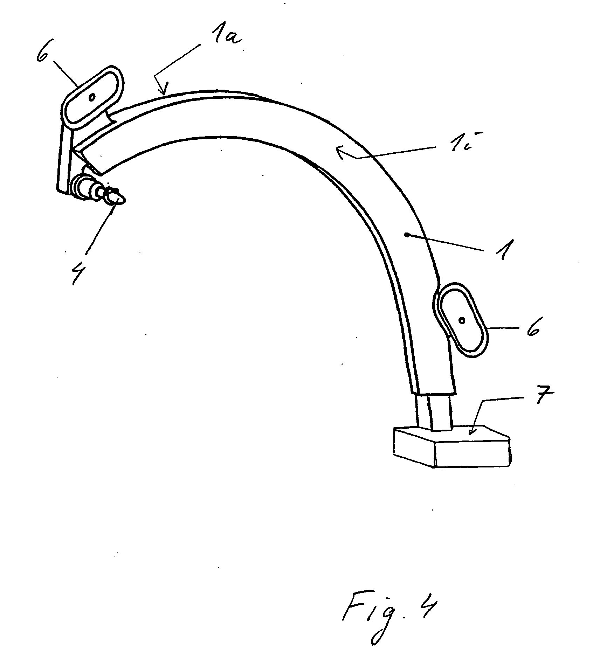

Figur 4 zeigt einen vorteilhaft verkleinerten Schutzstreifen 1, für den das Gerüst 2 weggefallen ist. Die Saugeinrichtung 6 besteht aus zwei Saugern, die im Bereich der beiden Enden des Schutzstreifens 1 angeordnet sind. Zwischen den beiden Saugern kann dem Verlauf der Rollbahn 1a folgend ein weiterer Sauger oder es können auch gegebenenfalls mehrere weitere Sauger angeordnet sein. Ferner ist der Positionierstift 4 nahe der Rollbahn 1a und ebenfalls an einem der beiden Enden des Schutzstreifens 1 angeordnet. An dem anderen Ende des Schutzstreifens 1 ist ein Anschlagelement 7 angeordnet, entweder in einem Stück angeformt oder vorzugsweise befestigt, das in Verbindung mit dem Positionierstift 4 für die passgenaue Positionierung des Schutzstreifens 1 am Karosserieteil 20 sorgt. Das Anschlagelement 7 dient als Konturanlage. So kann beispielsweise seine dem Schutzstreifen 1 zugewandte Fläche eine Anschlagfläche für eine untere Kante des Karosserieteils 20 bilden. Zumindest der Teil des Schutzstreifens 1, der die Rollbahn 1a bildet, ist in einem Stück durch Gießen geformt und kann insbesondere aus Grauguss bestehen. Der Positionierstift 4 kann in dem Guss einstückig mit dem Schutzstreifen 1 geformt oder auch erst nach dem Guss an dem gegossenen Schutzstreifen 1 befestigt worden sein. Das Gleiche gilt für das Anschlagelement 7, das allerdings bevorzugt aus Kunststoff gefertigt und am Gussstück befestigt ist. Für die Positionierung und Befestigung wird der Positionierstift 4 in ein am Karosserieteil 20 oder einem anderen Teil der Karosserie vorgesehenes Loch eingeführt. Anschließend wird der Schutzstreifen 1 um den von dem Positionierstift 4 gebildeten Drehpunkt gedreht, bis das Anschlagelement 7 an der Gegenkontur des Karosserieteils 20 oder eines anderen Teils der Karosserie anliegt. Der Schutzstreifen 1 wird mit seiner Innenseite 1 i gegen die Sichtfläche 21 gelegt, entweder leicht gedrückt oder bereits durch die Saugeinrichtung 6 angesaugt, und ist nun relativ zu der Bördelkante positioniert und am Bauteil 20 befestigt. Die Saugeinrichtung 6 kann aktiv oder passiv ausgeführt sein, was im Übrigen auch für die Saugeinrichtung 6 der Figur 1 gilt. In aktiver Ausführung ist sie über ein Leitungssystem mit Unterdruck beaufschlagbar. In passiver Ausführung wirkt sie lediglich als elastischer Saugnapf, der allerdings zum Lösen der Schutzstruktur belüftbar ist. Zusätzlich zu der Saugeinrichtung 6 kann ein oder können mehrere mechanische Spanner an der Schutzstruktur 1 angebracht sein. Ein oder mehrere mechanische Spanner kann oder können auch anstatt der Saugeinrichtung 6 vorgesehen sein.

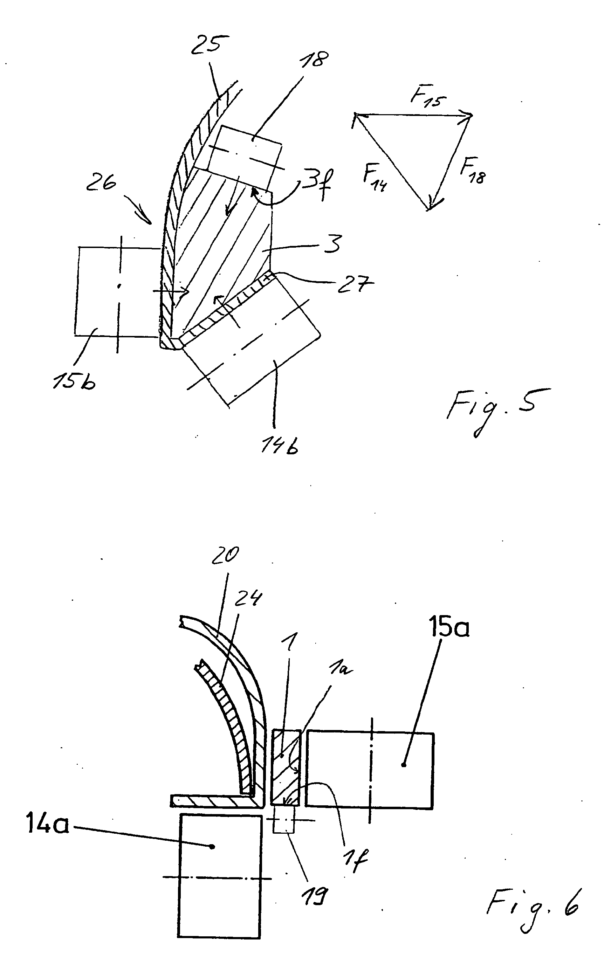

Figur 5 zeigt einen Bördelschritt in einem Bördelverfahren, bei dem eine innen liegende Schutzstruktur 3 verwendet wird. Die Schutzstruktur 3 ist in den Innenbereich der Bördelkante eingesetzt und stützt die nun unmittelbar als Rollbahn dienende Sichtfläche 26 eines Karosserieteils 25. Verwendet wird der Bördelkopf 10. Die Gegendruckrolle 15b rollt längs der Bördelkante unmittelbar auf der Sichtfläche 26 ab. Die Sichtfläche 26 bildet somit die Rollbahn. Allerdings wird diese Rollbahn von innen, d. h. an der Innenseite der Sichtfläche 26, von der Schutzstruktur 3 gestützt. Die Schutzstruktur 3 nimmt die von der Gegendruckrolle 15b beim Rollbördeln ausgeübte Kraft auf, so dass die Sichtfläche 26 nicht verformt werden kann. Die Schutzstruktur 3 weist eine der Gegendruckrolle 15b zugewandte Anlagefläche auf, die an die Innenseite der Sichtfläche 26 angeschmiegt geformt ist, so dass eine vollflächige, d. h. satte, Anlage erhalten wird. Des Weiteren bildet die Schutzstruktur 3 eine Anlagefläche für die Andruckrolle 15b, wobei diese Abstützung erst unmittelbar nach dem Umlegen des Randstreifens 27 erhalten wird. In diesem Sinne bildet auch der Randstreifen 27 eine von der Schutzstruktur 3 gestützte Rollbahn.

Bei dem in Figur 5 dargestellten Rollbördeln wird der Rand des Bauteils 25 lediglich umgelegt. Eine Falzverbindung wird nicht hergestellt. Das Rollenpaar 14b und 15b führt den letzten Bördelschritt aus. Dabei kann die Andruckrolle 14b mittels der Stelleinrichtung 17 federnd relativ zur Gegendruckrolle 15b eingestellt sein.

Um während des Rollbördelns einen geschlossenen Kraftfluss zu erhalten, kann vorteilhafterweise wie im Ausführungsbeispiel der Figur 5 zusätzlich zu den bereits beschriebenen Andruck- und Gegendruckrollen eine weitere Gegendruckrolle 18 drehbar am Bördelkopf 10 gelagert sein, die beim Rollbördeln als Nieder- bzw. Gegenhalter dient. Die Schutzstruktur 3 bildet für die Gegendruckrolle 18 an einer von der Andruckrolle 14b und der Gegendruckrolle 15b abgewandten Seite eine Rollbahn 3f, die zu den Rollen 14b und 15b so ausgerichtet ist, dass die von den drei Rollen 14b, 15b und 18 ausgeübten Kräfte F₁₄, F₁₅ und F₁₈ ein wie in Figur 5 ebenfalls angedeutet geschlossenes Kräftedreieck bilden.

Falls mit dem innen liegenden Schutzstreifen 3 der Randstreifen 27 nicht nur umgelegt, sondern eine Falzverbindung mit einem innen liegenden Karosserieteil hergestellt werden soll, wird der Rand des innen liegenden Karosserieteils zwischen der Innenseite der Sichtfläche 26 und dem Schutzstreifen 3 angeordnet, so dass sich zwischen dem Schutzstreifen 3 und der Gegendruckrolle 15b zwei Lagen von Material befinden. Für eine feste Falzverbindung ist es nicht unumgänglich erforderlich, dass der Randstreifen 27 vollständig umgelegt, d. h. an das innen liegende Karosserieteil angelegt wird. Die beiden Karosserieteile werden vor dem Rollfalzen vorzugsweise vorgefügt, beispielsweise mittels Punktschweißen oder Klebung, wobei eine im Randbereich vollflächige Verbindung gegenüber einer nur punktuellen bevorzugt wird.

Figur 6 zeigt den Falzschritt der Figur 3a in einer Modifikation. In dieser Modifikation ist an dem Bördelkopf 10 zusätzlich zu den Andruck- und Gegendruckrollen 14a-15c eine Tastrolle 19 drehbar gelagert. Während des Falzens rollt die Tastrolle 19 an einer Führungsbahn 1f der Schutzstruktur 1 ab. Der Bördelkopf 10 folgt der Bewegung der Drehachse der Tastrolle 19 längs der Bördelkante und wird somit von der Tastrolle 19 geführt. Analog kann die Gegendruckrolle 18 bei dem Rollbördeln mit innen liegendem Schutzstreifen 3 als den Bördelkopf 10 führende Tastrolle verwendet werden. Die Verwendung einer Tastrolle 19 oder 18 verringert den zur Führung des Bördelkopfs 10 zu betreibenden Mess- und Regelungsaufwand. Die Tastrolle 19, die grundsätzlich durch ein Gleitstück ersetzt werden könnte, ist zwischen den Rollen 14b und 15b in dem Winkelbereich angeordnet, in dem die Rollen 14b und 15b die Bördelkante umgreifen.

Verfügt der Bördelkopf 10 über solch eine Tastrolle 19 oder 18, wird es bevorzugt, wenn der Bördelkopf 10 mit einer Elastizitätskraft gegen die Führungsbahn 1f oder 3f gepresst wird. Die Elastizitätskraft wird vorteilhafterweise pneumatisch erzeugt. So kann der Bördelkopf 10 in einer Weiterentwicklung mittels einer weiteren Linearführung vorzugsweise längs der Z-Achse (Figur 2) hin und her beweglich angeordnet sein, beispielsweise indem der Halter in Z-Richtung beweglich an einer Plattform geführt ist oder zwischen dem Halter 11 und dem Rest des Bördelkopfs 10 eine derartige Linearführung zusätzlich gebildet ist. Für diese optionale weitere Linearführung wäre eine weitere Dämpfungseinrichtung vergleichbar der Dämpfungseinrichtung 16 vorgesehen. Anstatt einer Linearführung könnte beispielsweise auch eine Schwenkeinrichtung vorgesehen sein. Zum Anpressen der Tastrolle 19 oder 18 muss nur eine Beweglichkeit normal zur Führungskurve 1f oder 3f erhalten werden.

Die Tastrolle 19 und auch die Gegendruckrolle 18 (Figur 5), falls letztere nur oder auch als Tastrolle wirkend eingesetzt wird, kann durch einen berührungslos arbeitenden Abstandssensor ersetzt werden, der anstelle der Tastrolle 19 bzw. der Rolle 18 angeordnet sein kann, um die Führungsbahn 1f oder 3 f berührungslos abzutasten.

### Bezugszeichenliste

- 1: Schutzstreifen
- 1a: Rollbahn
- 1 i: Innenseite
- 1f: Führungsbahn
- 2: Gerüst
- 3: Schutzstreifen
- 3f: Führungsbahn
- 4: Positionierstift
- 5: Spanner
- 6: Saugeinrichtung
- 7: Anschlagelement

- 10: Bördelkopf
- 11: Halter
- 11 a: Schlittenführung
- 12: Träger
- 13: Schlitten
- 14a-c: Andruckrollen
- 15a-c: Gegendruckrollen
- 16: Dämpfungseinrichtung
- 17: Stelleinrichtung
- 18: Gegendruckrolle
- 19: Tastelement

- Y: Ausgleichsrichtung

## Patentansprüche

1. Bördelvorrichtung zum Rollbördeln eines Rands eines Bauteils (20; 25), die Bördelvorrichtung umfassend:
a) einen Bördelkopf (11, 12, 13),
b) eine von dem Bördelkopf (11, 12, 13) gelagerte, bei dem Rollbördeln auf dem Rand abrollbare erste Bördelrolle (14a, 14b, 14c)
c) und eine von dem Bördelkopf (11, 12, 13) gelagerte zweite Bördelrolle (15a, 15b, 15c), die eine Gegendruckrolle für die erste Bördelrolle (14a, 14b, 14c) bildet,
**dadurch gekennzeichnet, dass**
d) die Bördelvorrichtung eine an dem Bauteil (20; 25) befestigte oder befestigbare stabile Schutzstruktur (1; 3) umfasst, die für eine (15a, 15b, 15c) der Bördelrollen eine Rollbahn (1a) bildet oder eine Rollbahn (26) stützt:

2. Bördelvorrichtung nach Anspruch 1, **dadurch gekennzeichnet, dass** die Rollbahn (1a) an einer Außenseite der Schutzstruktur (1) gebildet ist und eine Innenseite (1i) der Schutzstruktur (1) an eine Oberflächenkontur des Bauteils (20) angepasst ist, an der die Schutzstruktur (1) bei dem Rollbördeln anliegt.

3. Bördelvorrichtung nach Anspruch 1, **dadurch gekennzeichnet, dass** die Schutzstruktur (3) für ein Einlegen in einen Innenbereich einer zu bildenden Bördelkante an die Form einer Innenseite des Bauteils (25) angepasst ist.

4. Bördelvorrichtung nach einem der vorhergehenden Ansprüche, **dadurch gekennzeichnet, dass** der Bördelkopf (11, 12, 13) eine dritte Bördelrolle (18) lagert, die eine weitere Gegendruckrolle für die erste Bördelrolle (14a, 14b, 14c) und vorzugsweise auch eine Gegendruckrolle für die zweite Bördelrolle (15a, 15b, 15c) bildet.

5. Bördelvorrichtung nach einem der vorhergehenden Ansprüche, **dadurch gekennzeichnet, dass** der Bördelkopf (11, 12, 13) ein Tastelement (19), vorzugsweise eine Tastrolle, lagert und die Schutzstruktur (1; 3) eine Führungsbahn (1f; 3f), vorzugsweise weitere Rollbahn, zur Führung des Tastelements (19) bildet, wobei die Führungsbahn (1f; 3f) dem Verlauf einer zu bildenden Bördelkante folgend geformt ist.

6. Bördelvorrichtung nach einem der vorhergehenden Ansprüche, **dadurch gekennzeichnet, dass** die Schutzstruktur (1; 3) für eine Befestigung an dem Bauteil (20; 25) eine Befestigungseinrichtung (4, 5, 6; 4, 6, 7) umfasst.

7. Bördelvorrichtung nach dem vorhergehenden Anspruch, **dadurch gekennzeichnet, dass** die Befestigungseinrichtung (4, 5, 6; 4, 6, 7) eine Saugeinrichtung (6) mit pneumatischen Saugern umfasst, die einer zu bildenden Bördelkante folgend voneinander beabstandet angeordnet sind.

8. Bördelvorrichtung nach einem der zwei vorhergehenden Ansprüche, **dadurch gekennzeichnet, dass** die Befestigungseinrichtung (4, 5, 6; 4, 6, 7) wenigstens einen mechanischen Spanner (5) für ein Festklemmen an dem Bauteil (20; 25) umfasst.

9. Bördelvorrichtung nach einem der vorhergehenden Ansprüche, **dadurch gekennzeichnet, dass** die Schutzstruktur (1; 3) als Schutzstreifen geformt ist, der einer zu bildenden Bördelkante folgt.

10. Bördelvorrichtung nach einem der vorhergehenden Ansprüche, **dadurch gekennzeichnet, dass** die Schutzstruktur (1; 3) wenigstens eine räumliche Marke (4, 7) für eine passgenaue Positionierung relativ zu einer zu bildenden Bördelkante aufweist.

11. Bördelvorrichtung nach dem vorhergehenden Anspruch, **dadurch gekennzeichnet, dass** die Marke ein Zentrierelement (4) oder ein Anschlagelement (7) ist.

12. Bördelvorrichtung nach einem der vorhergehenden Ansprüche, **dadurch gekennzeichnet, dass** die Schutzstruktur (1; 3) in einem Gießverfahren geformt ist, vorzugsweise als Metallgussstruktur.

13. Bördelvorrichtung nach einem der vorhergehenden Ansprüche, **dadurch gekennzeichnet, dass** ein Sensor vorgesehen, vorzugsweise ortsfest mit dem Bördelkopf (11, 12, 13) verbunden ist, mittels dem ein Abstand zwischen dem Bördelkopf (11, 12, 13) und wenigstens einem aus Bauteil (20; 25) und Schutzstruktur (1; 3) während des Rollbördelns ermittelbar ist.

14. Bördelvorrichtung nach einem der vorhergehenden Ansprüche, **dadurch gekennzeichnet, dass** eine 2D-Sensor vorgesehen, vorzugsweise ortsfest mit dem Bördelkopf (11, 12, 13) verbunden ist, mittels dem die Position des Bördelkopfs (11, 12, 13) relativ zu dem Bauteil (20; 25) in einer Ansichtsebene des Bauteils (20; 25) ermittelbar ist.

15. Vorrichtung nach einem der vorhergehenden Ansprüche, **dadurch gekennzeichnet, dass** der Bördelkopf (11, 12, 13) wenigstens eine der Bördelrollen, vorzugsweise die erste Bördelrolle (14a, 14b, 14c), federnd nachgiebig lagert, vorzugsweise gegen eine pneumatische Rückstellkraft.

16. Bördelvorrichtung nach einem der vorhergehenden Ansprüche, **dadurch gekennzeichnet, dass** die Schutzstruktur (1; 3) bei dem Rollbördeln eine Sichtfläche (21; 27), vorzugsweise eine Außenfläche, des Bauteils (20) schützt.

17. Bördelvorrichtung nach einem der vorhergehenden Ansprüche, **dadurch gekennzeichnet, dass** die Bördelvorrichtung eine Falzvorrichtung ist.

18. Bördelvorrichtung nach dem vorhergehenden Anspruch, **dadurch gekennzeichnet, dass** das Bauteil (20; 25) einen Teil einer Außenseite einer Fahrzeugkarosserie bildet und ein Randstreifen eines Innenteils der Karosserie in einer mittels der Bördelvorrichtung gebildeten Falztasche des Bauteils (20; 25) unter Bildung einer Falzverbindung aufgenommen ist.

19. Bördelvorrichtung nach einem der vorhergehenden Ansprüche, **dadurch gekennzeichnet, dass** die Vorrichtung zum Rollbördeln eines Rands einer Fahrzeugkarosserie oder eines Fahrzeugkarosserieteils (20; 25) verwendet wird.

20. Bördelvorrichtung nach einem der vorhergehenden Ansprüche, umfassend:
a) einen Halter (11),
b) eine von dem Halter (11) gehaltene, relativ zu dem Halter (11) in eine Ausgleichsrichtung (± Y) bewegbare Ausgleichsstruktur (12, 13),
c) eine von der Ausgleichsstruktur (12, 13) gelagerte erste Bördelrolle (14a, 14b, 14c),
d) eine von der Ausgleichsstruktur (12, 13) gelagerte zweite Bördelrolle (15a, 15b, 15c), die eine Gegendruckrolle für die erste Bördelrolle (14a, 14b, 14c) bildet,
e) und eine Dämpfungs- oder Rückstelleinrichtung (16), die einer in Ausgleichsrichtung (± Y) stattfindenden Bewegung der Ausgleichsstruktur (12, 13) eine an dem Halter (11) abgestützte Dämpfungs- oder Rückstellkraft, vorzugsweise elastische Rückstellkraft, entgegensetzt.

21. Bördelvorrichtung nach dem vorhergehenden Anspruch, **dadurch gekennzeichnet, dass** der Halter (11) die Ausgleichsstruktur (12, 13) linear bewegbar, vorzugsweise gleitend bewegbar, lagert.

22. Bördelvorrichtung nach einem der zwei vorhergehenden Ansprüche, **dadurch gekennzeichnet, dass** die Dämpfungs- oder Rückstellkraft pneumatisch erzeugt wird, vorzugsweise mittels einer linearen Kolben-Zylinder-Einheit.

23. Bördelvorrichtung nach einem der drei vorhergehenden Ansprüche, **dadurch gekennzeichnet, dass** die Ausgleichsstruktur (12, 13) einen an dem Halter (11) gehaltenen, relativ zu dem Halter (11) in die Ausgleichsrichtung (± Y) bewegbaren Träger (12) und eine relativ zu dem Träger (12) bewegbare Stellstruktur (13) umfasst und dass an einem aus Träger (12) und Stellstruktur (13) die erste Bördelrolle (14a, 14b, 14c) und an dem anderen die zweite Bördelrolle (15a, 15b, 15c) gelagert ist.

24. Bördelvorrichtung nach dem vorhergehenden Anspruch, **dadurch gekennzeichnet, dass** zwischen dem Träger (12) und der Stellstruktur (13) eine Stelleinrichtung (17) angeordnet ist, mittels der eine bei dem Rollbördeln zwischen der ersten Bördelrolle (14a, 14b, 14c) und der zweiten Bördelrolle (15a, 15b, 15c) wirkende Kraft einstellbar ist.

25. Bördelvorrichtung nach einem der vorhergehenden Ansprüche, ferner umfassend:
a) einen Träger (12),
b) eine an dem Träger (12) bewegbar gehaltene Stellstruktur (13),
c) eine von der Stellstruktur (13) gelagerte erste Bördelrolle (14a, 14b, 14c),
d) eine von dem Träger (12) gelagerte zweite Bördelrolle (15a, 15b, 15c), die eine Gegendruckrolle für die erste Bördelrolle (14a, 14b, 14c) bildet,
e) und eine zwischen dem Träger (12) und der Stellstruktur (13) angeordnete Stelleinrichtung (17), mittels der eine bei dem Rollbördeln zwischen der ersten Bördelrolle (14a, 14b, 14c) und der zweiten Bördelrolle (15a, 15b, 15c) wirkende Kraft einstellbar ist.

26. Bördelvorrichtung nach einem der zwei vorhergehenden Ansprüche, **dadurch gekennzeichnet, dass** die Stelleinrichtung (17) arretierbar ist.

27. Bördelvorrichtung nach einem der drei vorhergehenden Ansprüche, **dadurch gekennzeichnet, dass** der Träger (12) die Stellstruktur (13) linear bewegbar, vorzugsweise gleitend bewegbar, lagert.

28. Bördelvorrichtung nach einem der vier vorhergehenden Ansprüche, **dadurch gekennzeichnet, dass** der Träger (12) und die Stellstruktur (13) relativ zueinander in eine Ausgleichsrichtung (± Y) bewegbar sind, wobei die Ausgleichsrichtung (± Y) zumindest eine Richtungskomponente aufweist, die rechtwinkelig zu einer Bördelkante des Werkstücks und einer Drehachse der zweiten Bördelrolle (15a, 15b, 15c) weist.

29. Bördelvorrichtung nach einem der fünf vorhergehenden Ansprüche, **dadurch gekennzeichnet, dass** die Stelleinrichtung (17) eine Stellkraft pneumatisch erzeugt, vorzugsweise mittels einer linearen Kolben-Zylinder-Einheit.

30. Bördelvorrichtung nach einem der vorhergehenden Ansprüche, **dadurch gekennzeichnet, dass** der Bördelkopf wenigstens zwei erste Bördelrollen (14a, 14b, 14c) für sukzessiv nacheinander ausführbare Teilbördelungen lagert.

31. Bördelvorrichtung nach dem vorhergehenden Anspruch, **dadurch gekennzeichnet, dass** der Bördelkopf (11, 12, 13) pro erster Bördelrolle (14a, 14b, 14c) wenigstens eine als Gegendruckrolle wirkende zweite Bördelrolle (15a, 15b, 15c) lagert.

32. Bördelvorrichtung nach einem der vorhergehenden Ansprüche, **dadurch gekennzeichnet, dass** der Bördelkopf (11, 12, 13) wenigstens zwei erste Bördelrollen (14a, 14b, 14c) lagert, die bei sukzessive nacheinander ausführbaren Teilbördelungen je mit der gleichen zweiten Bördelrolle (15a, 15b, 15c) zusammenwirken.

33. Verfahren zum Rollbördeln eines Bauteils (20; 25) längs einer Bördelkante unter Verwendung einer Bördelvorrichtung nach einem der vorhergehenden Ansprüche, bei dem:
a) die Schutzstruktur (1; 3) längs der Bördelkante relativ zu dem Bauteil (20; 25) positioniert wird,
b) die erste Bördelrolle (14a, 14b, 14c) an einem längs einer Seite der Bördelkante erstreckten und um die Bördelkante zumindest teilweise umzulegenden Randstreifen
c) und die zweite Bördelrolle (15a, 15b, 15c) an einer längs der anderen Seite der Bördelkante erstreckten Fläche des Bauteils (20; 25) abgerollt werden, wobei die zweite Bördelrolle (15a, 15b, 15c) als Gegendruckrolle für die erste Bördelrolle (14a, 14b, 14c) wirkt,
d) und bei dem eine der Bördelrollen (14a, 14b, 14c; 15a, 15b, 15c) an einer von der Schutzstruktur (1) gebildeten Rollbahn (1a) oder einer von der Schutzstruktur (3) gestützten Rollbahn (26) abrollt.

34. Verfahren nach dem vorhergehenden Anspruch, **dadurch gekennzeichnet, dass** die Schutzstruktur (1) an einer Sichtfläche des Bauteils (20) anliegt und die Rollbahn (1a) bildet.

35. Verfahren nach Anspruch 33, **dadurch gekennzeichnet, dass** die Schutzstruktur (3) in einen Innenbereich der Bördelkante eingelegt wird und bei dem Rollbördeln an einer Innenseite einer die Rollbahn (26) bildenden Sichtfläche des Bauteils (25) anliegt.

## Claims

1. A flanging device for roll-flanging a rim of a component (20; 25), said flanging device including:
a) a flanging head (11, 12, 13);
b) a first flanging roller (14a, 14b, 14c) which is mounted by the flanging head (11, 12, 13) and can be rolled off on the rim during roll-flanging;
c) and a second flanging roller (15a, 15b, 15c) which is mounted by the flanging head (11, 12, 13) and forms a counter pressure roller for the first flanging roller (14a, 14b, 14c);
**characterised in that**
d) the flanging device includes a stable protective structure (1; 3) which is or can be fastened to the component (20; 25) and forms a rolling surface (1a) for one (15a, 15b, 15c) of the flanging rollers or supports a rolling surface (26).

2. The flanging device according to claim 1, **characterised in that** the rolling surface (1a) is formed on an outer side of the protective structure (1) and an inner side (1i) of the protective structure (1) is adapted to a surface contour of the component (20) which the protective structure (1) abuts during roll-flanging.

3. The flanging device according to claim 1, **characterised in that** the protective structure (3) for being inserted into an inner region of a flanging edge to be formed is adapted to the shape of an inner side of the component (25).

4. The flanging device according to any one of the preceding claims, **characterised in that** the flanging head (11, 12, 13) mounts a third flanging roller (18) which forms another counter pressure roller for the first flanging roller (14a, 14b, 14c) and preferably also a counter pressure roller for the second flanging roller (15a, 15b, 15c).

5. The flanging device according to any one of the preceding claims, **characterised in that** the flanging head (11, 12, 13) mounts a sensing element (19), preferably a sensing roller, and the protective structure (1; 3) forms a guiding path (1f; 3f), preferably another rolling surface, for guiding the sensing element (19), wherein the guiding path (1f; 3f) is shaped to follow the course of a flanging edge to be formed.

6. The flanging device according to any one of the preceding claims, **characterised in that** the protective structure (1; 3) includes a fastening apparatus (4, 5, 6; 4, 6, 7) for fastening to the component (20; 25).

7. The flanging device according to the preceding claim, **characterised in that** the fastening apparatus (4, 5, 6; 4, 6, 7) includes a suction apparatus (6) comprising pneumatic suckers which are arranged spaced out from each other, following a flanging edge to be formed.

8. The flanging device according to any one of the preceding two claims, **characterised in that** the fastening apparatus (4, 5, 6; 4, 6, 7) includes at least one mechanical clamp (5) for clamping to the component (20; 25).

9. The flanging device according to any one of the preceding claims, **characterised in that** the protective structure (1; 3) is formed as a protective strip which follows a flanging edge to be formed.

10. The flanging device according to any one of the preceding claims, **characterised in that** the protective structure (1; 3) comprises at least one spatial marker (4, 7) for positioning in an exact fit relative to a flanging edge to be formed.

11. The flanging device according to the preceding claim, **characterised in that** the marker is a centring element (4) or a stopper element (7).

12. The flanging device according to any one of the preceding claims, **characterised in that** the protective structure (1; 3) is shaped in a moulding method, preferably as a cast metal structure.

13. The flanging device according to any one of the preceding claims, **characterised in that** a sensor is provided, preferably connected stationary to the flanging head (11, 12, 13), by means of which a distance between the flanging head (11, 12, 13) and at least one of the component (20; 25) and the protective structure (1; 3) can be ascertained during roll-flanging.

14. The flanging device according to any one of the preceding claims, **characterised in that** a 2D sensor is provided, preferably connected stationary to the flanging head (11, 12, 13), by means of which the position of the flanging head (11, 12, 13) relative to the component (20; 25) can be ascertained in a plane of view of the component (20; 25).

15. The device according to any one of the preceding claims, **characterised in that** the flanging head (11, 12, 13) mounts at least one of the flanging rollers, preferably the first flanging roller (14a, 14b, 14c), resiliently yielding, preferably against a pneumatic restoring force.

16. The flanging device according to any one of the preceding claims, **characterised in that** the protective structure (1; 3) protects a viewed area (21; 27), preferably an outer area, of the component (20) during roll-flanging.

17. The flanging device according to any one of the preceding claims, **characterised in that** the flanging device is a hemming device.

18. The flanging device according to the preceding claim, **characterised in that** the component (20; 25) forms a part of an outer side of a vehicle body, and a rim strip of an inner part of the body is received in a hem slot of the component (20; 25) formed by means of the flanging device, forming a hem connection.

19. The flanging device according to any one of the preceding claims, **characterised in that** the device is used for roll-flanging a rim of a vehicle body or vehicle body part (20; 25).

20. The flanging device according to any one of the preceding claims, including:
a) a holder (11);
b) an equalisation structure (12, 13) which is held by the holder (11) and can be moved relative to the holder (11) in a direction of equalisation (± Y);
c) a first flanging roller (14a, 14b, 14c) which is mounted by the equalisation structure (12, 13);
d) a second flanging roller (15a, 15b, 15c) which is mounted by the equalisation structure (12, 13) and forms a counter pressure roller for the first flanging roller (14a, 14b, 14c);
e) and a damping or restoring apparatus (16) which opposes a movement of the equalisation structure (12, 13) in the direction of equalisation (± Y) with a damping or restoring force, preferably an elastic restoring force, supported on the holder (11).

21. The flanging device according to the preceding claim, **characterised in that** the holder (11) mounts the equalisation structure (12, 13) such that it can move, preferably slide, linearly.

22. The flanging device according to any one of the preceding two claims, **characterised in that** the damping or restoring force is generated pneumatically, preferably by means of a linear piston-cylinder unit.

23. The flanging device according to any one of the preceding three claims, **characterised in that** the equalisation structure (12, 13) includes a bearer (12) which is held on the holder (11) and can be moved relative to the holder (11) in the direction of equalisation (± Y), and an actuating structure (13) which can be moved relative to the bearer (12), and **in that** the first flanging roller (14a, 14b, 14c) is mounted on one of the bearer (12) and the actuating structure (13), and the second flanging roller (15a, 15b, 15c) is mounted on the other.

24. The flanging device according to the preceding claim, **characterised in that** an actuating apparatus (17) is arranged between the bearer (12) and the actuating structure (13), by means of which a force acting between the first flanging roller (14a, 14b, 14c) and the second flanging roller (15a, 15b, 15c) during roll-flanging can be set.

25. The flanging device according to any one of the preceding claims, further including:
a) a bearer (12);
b) an actuating structure (13) which is held such that it can be moved on the bearer (12);
c) a first flanging roller (14a, 14b, 14c) which is mounted by the actuating structure (13);
d) a second flanging roller (15a, 15b, 15c) which is mounted by the bearer (12) and forms a counter pressure roller for the first flanging roller (14a, 14b, 14c);
e) and an actuating apparatus (17) arranged between the bearer (12) and the actuating structure (13), by means of which a force acting between the first flanging roller (14a, 14b, 14c) and the second flanging roller (15a, 15b, 15c) during roll-flanging can be set.

26. The flanging device according to any one of the preceding two claims, **characterised in that** the actuating apparatus (17) can be arrested.

27. The flanging device according to any one of the preceding three claims, **characterised in that** the bearer (12) mounts the actuating structure (13) such that it can move, preferably slide, linearly.

28. The flanging device according to any one of the preceding four claims, **characterised in that** the bearer (12) and the actuating structure (13) can be moved relative to each other in a direction of equalisation (± Y), wherein the direction of equalisation (± Y) comprises at least a direction component which points at right angles to a flanging edge of the work piece and a rotational axis of the second flanging roller (15a, 15b, 15c).

29. The flanging device according to any one of the preceding five claims, **characterised in that** the actuating apparatus (17) generates an actuating force pneumatically, preferably by means of a linear piston-cylinder unit.

30. The flanging device according to any one of the preceding claims, **characterised in that** the flanging head mounts at least two first flanging rollers (14a, 14b, 14c) for partial flanging which can be performed successively and consecutively.

31. The flanging device according to the preceding claim, **characterised in that** per first flanging roller (14a, 14b, 14c), the flanging head (11, 12, 13) mounts at least one second flanging roller (15a, 15b, 15c) acting as a counter pressure roller.

32. The flanging device according to any one of the preceding claims, **characterised in that** the flanging head (11, 12, 13) mounts at least two first flanging rollers (14a, 14b, 14c) which each co-operate with the same second flanging roller (15a, 15b, 15c) in partial flanging which can be performed successively and consecutively.

33. A method for roll-flanging a component (20; 25) along a flanging edge, using a flanging device according to any one of the preceding claims, wherein:
a) the protective structure (1; 3) is positioned along the flanging edge relative to the component (20; 25);
b) the first flanging roller (14a, 14b, 14c) is rolled off on a rim strip which extends along one side of the flanging edge and is to be at least partially beaded around the flanging edge;
c) and the second flanging roller (15a, 15b, 15c) is rolled off on an area of the component (20; 25) which extends along the other side of the flanging edge, wherein the second flanging roller (15a, 15b, 15c) acts as a counter pressure roller for the first flanging roller (14a, 14b, 14c);
d) and wherein one of the flanging rollers (14a, 14b, 14c; 15a, 15b, 15c) rolls off on a rolling surface (1a) formed by the protective structure (1) or on a rolling surface (26) supported by the protective structure (3).

34. The method according to the preceding claim, **characterised in that** the protective structure (1) abuts a viewed area of the component (20) and forms the rolling surface (1a).

35. The method according to claim 33, **characterised in that** the protective structure (3) is inserted into an inner region of the flanging edge and, during roll-flanging, abuts an inner side of a viewed area of the component (25) forming the rolling surface (26).

## Revendications

1. Dispositif à border pour border roulé le bord d'un élément de construction (20 ; 25), le dispositif à border comprenant :
a) une tête à border (11, 12, 13),
b) une première roulette à border (14a, 14b, 14c) supportée par la tête à border (11, 12, 13) et pouvant rouler sur le bord lors du bordage
c) et une seconde roulette à border (15a, 15b, 15c), supportée par la tête à border (11, 12, 13) et qui forme une roulette de contre-pression pour la première roulette à border (14a, 14b, 14c),
**caractérisé en ce que**
d) le dispositif à border comprend une structure de protection (1 ; 3) stable fixée ou à fixer sur l'élément de construction (20 ; 25), laquelle forme une voie de roulement (1a) ou soutient une voie de roulement (26) pour l'une (15a, 15b, 15c) des roulettes à border.

2. Dispositif à border selon la revendication 1, **caractérisé en ce que** la voie de roulement (1a) est formée sur un côté extérieur de la structure de protection (1) et un côté intérieur (1i) de la structure de protection (1) est adapté à un contour de surface de l'élément de construction (20) contre lequel s'applique la structure de protection (1) lors du bordage.

3. Dispositif à border selon la revendication 1, **caractérisé en ce que** la structure de protection (3) est adaptée à la forme d'un côté intérieur de l'élément de construction (25), pour une insertion dans une zone intérieure d'une arête bordée à former.

4. Dispositif à border selon l'une des revendications précédentes, **caractérisé en ce que** la tête à border (11, 12, 13) supporte une troisième roulette à border (18) qui forme une autre roulette de contre-pression pour la première roulette à border (14a, 14b, 14c) et de préférence aussi une roulette de contre-pression pour la deuxième roulette à border (15a, 15b, 15c).

5. Dispositif à border selon l'une des revendications précédentes, **caractérisé en ce que** la tête à border (11, 12, 13) supporte un élément de palpage (19), de préférence une roulette de palpage, et la structure de protection (1 ; 3) forme une voie de guidage (1f ; 3f), de préférence une autre voie de roulement, pour guider l'élément de palpage (19), la voie de guidage (1f ; 3f) étant formée de manière à suivre l'allure d'une arête bordée à former.

6. Dispositif à border selon l'une des revendications précédentes, **caractérisé en ce que** la structure de protection (1 ; 3) comprend un dispositif de fixation (4, 5, 6 ; 4, 6, 7) pour une fixation sur l'élément de construction (20 ; 25).

7. Dispositif à border selon la revendication précédente, **caractérisé en ce que** le dispositif de fixation (4, 5, 6 ; 4, 6, 7) comprend un dispositif d'aspiration (6) avec des ventouses pneumatiques qui sont disposées à distance les unes des autres en suivant une arête bordée à former.

8. Dispositif à border selon l'une des deux revendications précédentes, **caractérisé en ce que** le dispositif de fixation (4, 5, 6 ; 4, 6, 7) comprend au moins un tendeur mécanique (5) pour un blocage sur l'élément de construction (20 ; 25).

9. Dispositif à border selon l'une des revendications précédentes, **caractérisé en ce que** la structure de protection (1 ; 3) est formée en tant que bande de protection qui suit une arête bordée à former.

10. Dispositif à border selon l'une des revendications précédentes, **caractérisé en ce que** la structure de protection (1 ; 3) présente au moins un repère spatial (4, 5) pour un positionnement précis par rapport à une arête bordée à former.

11. Dispositif à border selon la revendication précédente, **caractérisé en ce que** le repère est un élément de centrage (4) ou un élément de butée (7).

12. Dispositif à border selon l'une des revendications précédentes, **caractérisé en ce que** la structure de protection (1 ; 3) est formée par un procédé de coulée, de préférence sous la forme d'une structure en fonte métallique.

13. Dispositif à border selon l'une des revendications précédentes, **caractérisé en ce qu'**il est prévu un capteur, de préférence solidaire de la tête à border (11, 12, 13), au moyen duquel il est possible de déterminer pendant le bordage une distance entre la tête à border (11, 12, 13) et au moins l'élément de construction (20 ; 25) ou la structure de protection (1 ; 3).

14. Dispositif à border selon l'une des revendications précédentes, **caractérisé en ce qu'**il est prévu un capteur à trois dimensions, de préférence solidaire de la tête à border (11, 12, 13), au moyen duquel il est possible de déterminer la position de la tête à border (11, 12, 13) par rapport à l'élément de construction (20 ; 25) dans un plan de projection de l'élément de construction (20 ; 25).

15. Dispositif à border selon l'une des revendications précédentes, **caractérisé en ce que** la tête à border (11, 12, 13) supporte de manière élastique et souple, de préférence contre une force de rappel pneumatique, au moins l'une des roulettes à border, de préférence la première roulette à border (14a, 14b, 14c).

16. Dispositif à border selon l'une des revendications précédentes, **caractérisé en ce que** la structure de protection (1 ; 3) protège, lors du bordage, une surface visible (21 ; 27), de préférence une surface extérieure, de l'élément de construction (20).

17. Dispositif à border selon l'une des revendications précédentes, **caractérisé en ce que** le dispositif à border est un dispositif à plier.

18. Dispositif à border selon la revendication précédente, **caractérisé en ce que** l'élément de construction (20 ; 25) forme une partie d'une face extérieure d'une carrosserie de véhicule et une bande de bordure d'une partie intérieure de la carrosserie est reçue dans une feuillure de l'élément de construction (20 ; 25), formée au moyen du dispositif à border, en formant un assemblage par agrafage.

19. Dispositif à border selon l'une des revendications précédentes, **caractérisé en ce que** le dispositif est utilisé pour border roulé un bord d'une carrosserie de véhicule ou d'un élément de carrosserie de véhicule (20 ; 25).

20. Dispositif à border selon l'une des revendications précédentes, comprenant :
a) un support (11),
b) une structure de compensation (12, 13) maintenue par le support (11), déplaçable par rapport au support (11) dans une direction de compensation (± Y),
c) une première roulette à border (14a, 14b, 14c) supportée par la structure de compensation (12, 13),
d) une seconde roulette à border (15a, 15b, 15c), supportée par la structure de compensation (12, 13), laquelle forme une roulette de contre-pression pour la première roulette à border (14a, 14b, 14c)
e) et un dispositif d'amortissement ou de rappel (16) qui oppose une force d'amortissement ou de rappel, de préférence une force de rappel élastique, soutenue par le support (11), à un déplacement se produisant dans la direction de compensation (± Y), de la structure de compensation (12, 13).

21. Dispositif à border selon la revendication précédente, **caractérisé en ce que** le montant (11) supporte la structure de compensation (12, 13) de manière déplaçable linéairement, de préférence déplaçable à glissement.

22. Dispositif à border selon l'une des deux revendications précédentes, **caractérisé en ce que** la force d'amortissement ou force de rappel est produite de manière pneumatique, de préférence au moyen d'une unité linéaire à cylindre et piston.

23. Dispositif à border selon l'une des trois revendications précédentes, **caractérisé en ce que** la structure de compensation (12, 13) comprend un support (12) maintenu sur le montant (11) et déplaçable dans la direction de compensation (± Y) par rapport au montant (11), ainsi qu'une structure de réglage (13) déplaçable par rapport au support (12), et **en ce que** la première roulette à border (14a, 14b, 14c) est montée sur le support (12) ou la structure de réglage (13), et la seconde roulette à border (15a, 15b, 15c) sur l'autre de ces éléments.

24. Dispositif à border selon la revendication précédente, **caractérisé en ce qu'**entre le support (12) et la structure de réglage (13) est disposé un dispositif de réglage (17) au moyen duquel une force agissant lors du bordage entre la première roulette à border (14a, 14b, 14c) et la seconde roulette à border (15a, 15b, 15c), peut être réglée.

25. Dispositif à border selon l'une des revendications précédentes, comprenant en outre :
a) un support (12),
b) une structure de réglage (13) maintenue déplaçable sur le support (12),
c) une première roulette à border (14a, 14b, 14c) supportée par la structure de réglage (13),
d) une seconde roulette à border (15a, 15b, 15c) supportée par le support (12), qui forme une roulette de contre-pression pour la première roulette à border (14a, 14b, 14c),
e) et un dispositif de réglage (17), disposé entre le support (12) et la structure de réglage (13), au moyen duquel une force agissant lors du bordage, entre la première roulette à border (14a, 14b, 14c) et la seconde roulette à border (15a, 15b, 15c), peut être réglée.

26. Dispositif à border selon l'une des deux revendications précédentes, **caractérisé en ce que** le dispositif de réglage (17) peut être bloqué.

27. Dispositif à border selon l'une des trois revendications précédentes, **caractérisé en ce que** le support (12) supporte la structure de réglage (13) de manière déplaçable linéairement, de préférence déplaçable à glissement.

28. Dispositif à border selon l'une des quatre revendications précédentes, **caractérisé en ce que** le support (12) et la structure de réglage (13) sont déplaçables l'un par rapport à l'autre dans une direction de compensation (± Y), la direction de compensation (± Y) présentant au moins une composante de direction qui est perpendiculaire à une arête bordée de la pièce et un axe de rotation de la seconde roulette à border (15a, 15b, 15c).

29. Dispositif à border selon l'une des cinq revendications précédentes, **caractérisé en ce que** le dispositif de réglage (17) produit une force de réglage pneumatique, de préférence au moyen d'une unité linéaire à cylindre et piston.

30. Dispositif à border selon l'une des revendications précédentes, **caractérisé en ce que** la tête à border supporte au moins deux premières roulettes à border (14a, 14b, 14c) pour des bordages partiels à exécuter successivement l'un après l'autre.

31. Dispositif à border selon la revendication précédente, **caractérisé en ce que** la tête à border (11, 12, 13) supporte par première roulette à border (14a, 14b, 14c) au moins une seconde roulette à border (15a, 15b, 15c) servant de roulette de contre-pression.

32. Dispositif à border selon l'une des revendications précédentes, **caractérisé en ce que** la tête à border (11, 12, 13) supporte au moins deux premières roulettes à border (14a, 14b, 14c) qui, lors de bordages partiels à exécuter successivement l'un après l'autre, coopèrent chacune avec la même seconde roulette à border (15a, 15b, 15c).

33. Procédé pour border roulé un élément de construction (20 ; 25) le long d'une arête bordée par utilisation d'un dispositif à border selon l'une des revendications précédentes, dans lequel :
a) la structure de protection (1 ; 3) est positionnée le long de l'arête bordée par rapport à l'élément de construction (20 ; 25),
b) la première roulette à border (14a, 14b, 14c) est roulée sur une bande de bordure s'étendant le long d'un côté de l'arête bordée et à replier au moins en partie autour de l'arête bordée,
c) et la seconde roulette à border (15a, 15b, 15c) est roulée sur une surface de l'élément de construction (20 ; 25) s'étendant le long de l'autre côté de l'arête bordée, la seconde roulette à border (15a, 15b, 15c) servant de roulette de contre-pression pour la première roulette à border (14a, 14b, 14c),
d) et dans lequel l'une des roulettes à border (14a, 14b, 14c ; 15a, 15b, 15c) roule sur une voie de roulement (1a) formée par la structure de protection (1) ou une voie de roulement (26) soutenue par la structure de protection (3).

34. Procédé selon la revendication précédente, **caractérisé en ce que** la structure de protection (1) s'applique contre une surface visible de l'élément de construction (20) et forme la voie de roulement (1a).

35. Procédé selon la revendication 33, **caractérisé en ce que** la structure de protection (3) est placée dans une zone intérieure de l'arête bordée et s'applique, lors du bordage, contre une face intérieure d'une surface visible de l'élément de construction (25), formant la voie de roulement (26).
